# DEMANDE DE BREVET EUROPEEN

(11) **EP 1 167 319 A1**
(43) Date de publication de la demande: **02.01.2002**
(21) Numéro de dépôt: 01530001.5
(22) Date de dépôt: 29.05.2001
(51) Int. Cl.: C04B 28/26, C04B 18/16

(54) **Procédé industriel pour la fabrication des agglomerés de ciment, en utilisant des décombres de construction et démolitions comme agrégats, en les agglutinants grâce à un additif chimique**

(30) Priorité: 29.05.2000 ES 200001475
(71) Demandeur: Maquelri, S.L., 35015 Las Palmas de Gran Canaria (ES)
(72) Inventeur: Gimenez Ruiz, Don Manuel, 35015 Las Palmas de Gran Canaria (ES)

(57) **Abrégé**

Procédé industriel pour la fabrication d'agglomeré des cements, en se servant, comme agrégats, des décombres engendrés dans l'industrie de la construction et les scories de fonderie, les agglutinant grâce a un additif chimique.

Avec la présente invention il est possible de produire des mortiers et/ou bétons aptes pour l'industrie de la construction, caracterisés pour la substitution des sables et agrégats par des décombres des travaux et des demolitions, convenablement pilés jusqu'à la consécution de differentes granulometries en dependant de la dosification desirée. Dîtes decombres, convenablement melangés avec cement, eau et un additif chimique composé de differents silicates, solvants et resines, donnant lieu a des mortiers et/ou bétons qui presentent excelentes proprietés fisiques de resistence et impermeabilité que les deviennent en propres pour la fabrication des produits communs de l'industrie de la construction: entrevous, blocs, valstructbriques, bordures, pavés, carreaux, souschaussés, etc.

## Description

Comme déjá dit ce nouveau procèdé s'oriente á la transformation des décombres et déchets engendrés dans l'industrie de la construction (mastocs de béton, plâtre, ceramique, peinture, bris, metals, boues provenants du netoyage des bétoniers dans les plants de premèlange, boues des ateliers de decoupage de marbre et/ou granit, dèchets des usines de carrelages, etc.) ainsi que des scories de fonderie, en mortiers et/ou bètons propres pous leur utilisation dans la même industrie.

Jusqu'a present il n'a èté connu aucun methode pour y mettre en valeur ces décombres, , même que les profiter comme béton et/ou mortiers. Tout ce qu'il se faisait etait pour le ramplissage des souschaussées et quelque amelioration des sols, fondamentalement dû a l'impossibilité d'obtenir, tant fisiquement comme chimiquement, l'agglutination des dites décombres par la seule addition de l'eau et du cement, sauf que s'employait ce dernier (le cement) en des proportions simplement prohibitives. Maintenant, cette cohesion est obtenûe grâce a l'aportation d'un additif composé,
fondamentalement, par des silicates, solvants et rèsines, dans les proportions suivantes: silicate potasique, 21,5%; silicate sodique, 25%; metasilicate sodique, 5,5%; dicromate potasique, 0,1%; solvants, 33,5% et résines, 14,4%; lequel parvient à reagir avec les chaux libres encore existentes dans les dites décombres, en composant des nouvelles mollecules de silicates calciques.

Autre des avantages du procédé industriel de la presénte invention est que, les décombres des travaux cités auparavant etant la base des aggregats, on obtient le but de les donner un nouveau usage commercial a ces materiaux, qui sont, d'habitude, mis au rebut. Ça se traduit en la reduction de l'împact environammental de l'industrie de la construction, dû a que on evite la creation des aires pour son vertu et decharge ou la surcharge des dejá existentes, en reduisant le besoin d'ouverture de nouvelles carrieres pour l'extraction d'aggregats.

### EXAMPLE TYPE DE FABRICATION DE MORTIERS AVEC DES DÉCOMBRES DES TRAVAUX, A TITRE ILLUSTRANT ET NON LIMITATIF.

Pour y arriver a son ellaboration il faut d'effectuer une sèrie d'operations preliminaires qui se reflechent en detaille a suivre:
a) Separer le fer, les metals, les plastics, les bois et les papiers des décombres.
b) On procede, maintenant, au pilage (en plusieures étapes, s'il faut) des décombres selectionés jusqu'obtenir la granulation desirée.
c) Les aggregats ainsi obtenus se melangent avec les quantités de cement necéssaires pour y obtenir les caracteristiques du mortier desiré en doses qui verieront entre le 70 et le 78% d'aggregats (prenant soin de que les fins de tamis inferieur a 0,3mm n'excedent pas de 20%), et du cement entre le 22 et le 30%.
d) L'additif auparavant dit s'ajoutera a l'eau de gâcher dans des proportions d'entre le 3% et le 10% du poids en cement incorporé au mortier. La quantité d'eau será la necessaire pour y obtenir la consistance desirée du mortier.

Le but de la presénte invention est totalement nouveau dans le domaine de l'industrie de la construction, etant remarcable non seulement pour la recuperation des décombres des travaux et des demolitions, les transformant en des produits utilisables dans la même industrie, mais parce que, en plus de celá, permettre la production des mortiers et/ou des bétons qui atteint des resistences similaires, mais en delais inferieurs, a ces des conventionaux, les donnat d'un degré d'impermeabilité superieur a ceux derniers.

## Revendications

1. Procédé industriel ou système **CARACTERISÉ** pour la transformation, grâce a une reaction chimique, des mollecules de la chaux libre (O Ca) existentes dans les cements, hydratés ou non, et dans les décombres provenants des travaux et des démoitions, en mollecules de silicates palciques (Si 03 Ca), grâce a un additif composé de differents silicates, solvants et resines, dans les proportiones suivantes: silicate potasique, 21,5%; silicate sodique, 25%; metasilicate sodique, 5,5%; dicromate potasique, 0,1%; solvants, 33,5% et résines, 14,4%; lequel atteint a réagir avec les chaux libres encore existentes dans les dites décombres, en formant des nouvelles mollecules de silicates calciques.

2. Procédé industriel ou système, basé en la revendication anterieure n° 1, **CARACTÉRISÉ** pour la réutilisation des décombres des travaux et demolitions générés dans l'industrie de la construction, préalablement triturés et classifiés pour l'elaboration des mortiers, dosifiant commes des aggregats ces décombres auparavant mentionés, en proportions du 70 jusqu'á 78%, le cement du 22 jusqu'á 30%, dependant du produit final a obtenir (blocs, briques, pavés, sousols de chaussées, etc.) en additionant l'eau et l'additif de la 1ere, revendication en proportions qui varient entre le 3 et le 10% du poids en cement.

3. Procédé industriel ou système, basé en la revendication anterieure n° 1, pour la fabrication des mortiers et/ou des bétons, **CARACTÉRISÉ** pour la reduction des quantités de cement a utiliser, d'un 10-20% en la dose conventionelle, en ajoutant l'additif de la revendication prémière a l'eau de pétrir, en obtenant des resistences similaires.

4. Procédé industriel ou système, basé dans la revendication anteriuere n° 1, avec relation aux mortiers, **CARACTÉRISÉ** pour ameliorer la resistence des ceux, grâce á l'application par pulverisation superficiale ou par inmersion de dites mortiers dans l'additif reféré dans la revendication n° 1 anterieure, sans avoir besoin de nouvelles aportations de cements, comme etait le cas du mortier employé pour l'elaboration des briques, pavés, blocs, etc.
